(19) Europäisches Patentamt
European Patent Office
Office européen des brevets

(11) **EP 4 707 579 A2**

(12) **EUROPÄISCHE PATENTANMELDUNG**

(43) Veröffentlichungstag:
**11.03.2026 Patentblatt 2026/11**

(21) Anmeldenummer: **26152975.4**

(22) Anmeldetag: **01.10.2018**

(51) Internationale Patentklassifikation (IPC):
***F02N 11/04*** *(2006.01)*

(52) Gemeinsame Patentklassifikation (CPC):
**B60L 58/20; B60L 1/00; B60L 50/61; F02N 11/006;
F02N 11/04; F02N 11/0866; H02J 7/1492;**
B60R 16/03; F02N 11/0814; F02N 2011/0888;
F02N 2300/2002; H02J 2105/33; Y02T 10/62;
Y02T 10/70

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorität: **25.10.2017 DE 102017124943**

(62) Dokumentnummer(n) der früheren Anmeldung(en)
nach Art. 76 EPÜ:
**18197820.6 / 3 476 648**

(71) Anmelder: **MAN Truck & Bus SE
80995 München (DE)**

(72) Erfinder:
• **Fischer, Detlef
80995 München (DE)**
• **Pfau, Stefan
82377 Penzberg (DE)**

(74) Vertreter: **v. Bezold & Partner Patentanwälte -
PartG mbB
Ridlerstraße 57
80339 München (DE)**

Bemerkungen:
Diese Anmeldung ist am 20.01.2026 als
Teilanmeldung zu der unter INID-Code 62 erwähnten
Anmeldung eingereicht worden.

(54) **BORDNETZ FÜR EIN KRAFTFAHRZEUG, INSBESONDERE EINES MILDHYBRID- ODER MIKROHYBRID-FAHRZEUGS**

(57) Die Erfindung betrifft ein Bordnetz für ein Kraftfahrzeug, insbesondere ein Bordnetz eines Mildhybrid- oder Mikrohybrid-Fahrzeugs mit Start-Stopp-Funktion. Die Erfindung betrifft ferner ein Kraftfahrzeug mit einem solchem Bordnetz. Das Bordnetz (1) umfasst ein erstes Teilnetz (2), in dem eine erste Nennspannung (U1) anliegt, aufweisend einen ersten Energiespeicher (5) und einen durch mehrere Verbraucher gebildeten ersten Lastwiderstand (6); und ein zweites Teilnetz (3), in dem eine zweite Nennspannung (U2) anliegt, aufweisend eine generatorisch und motorisch betreibbare erste elektrische Maschine (10), die dazu ausgebildet ist, einen Verbrennungsmotor des Kraftfahrzeugs zumindest zeitweise anzutreiben und in einem Rekuperationsbetrieb elektrische Energie zu erzeugen; und einen zweiten Energiespeicher (9), der dazu ausgebildet ist, die erste elektrische Maschine (10) zumindest zeitweise mit elektrischer Energie zu versorgen. Das Bordnetz umfasst ferner einen Spannungswandler (4), der das erste und zweite Teilnetz (2, 3) miteinander koppelt und der ausgebildet ist, das erste Teilnetz (2) zumindest zeitweise mit elektrischer Energie aus dem zweiten Teilnetz (3) zu versorgen. Zur Erhöhung der Kraftstoffeffizienz des Fahrzeug ist im ersten Teilnetz (2) eine generatorisch betreibbare zweite elektrische Maschine (8) vorgesehen, die von einer Steuereinrichtung (12) steuerbar ist, um das erste Teilnetz (2) zumindest zeitweise mit elektrischer Energie zu versorgen.

FIG. 1

EP 4 707 579 A2

**Beschreibung**

Die Erfindung betrifft ein Bordnetz für ein Kraftfahrzeug, insbesondere ein Bordnetz eines Mildhybrid- oder Mikrohybrid-Fahrzeugs mit Start-Stopp-Funktion. Die Erfindung betrifft ferner ein Kraftfahrzeug mit einem solchem Bordnetz.

Durch stetig strenger werdende Abgasgesetzgebungen und Forderungen der Fahrzeughalter nach reduzierten Betriebskosten werden an Kraftfahrzeuge zunehmend hohe Anforderungen bezüglich ihres Kraftstoffverbrauchs und ihrer Schadstoffemissionen gestellt, während gleichzeitig ein hoher Fahrkomfort realisiert werden soll. Um dieses Ziel zu erreichen, ist es aus der Praxis bekannt, Fahrzeuge mit einem Mildhybrid- oder Mikrohybridsystem auszurüsten, bei denen eine elektrische Maschine (Startergenerator) zum Starten des Verbrennungsmotors und zur Bremsenergierückgewinnung (Rekuperation) verwendet wird oder bei Mildhybridsystemen den Verbrennungsmotor zur Leistungssteigerung unterstützen kann. Ein rein elektrisches Fahren ist nicht möglich. Derartige Fahrzeuge können mit einer Stopp-Start-Automatik-Vorrichtung ausgerüstet sein, mittels derer die Brennkraftmaschine unter vorbestimmten Bedingungen automatisch abgeschaltet und gestartet werden kann. So wird der Verbrennungsmotor beispielsweise automatisch abgeschaltet, wenn keine Antriebskraft benötigt wird, z. B. während des Anhaltens an einer Verkehrsampel. Sobald wieder Antriebskraft benötigt wird, wenn also etwa die Verkehrsampel auf "Grün" schaltet und der Fahrer das Gaspedal betätigt, erfolgt ein Neustart über den Elektromotor. Der Kraftstoffverbrauch des Fahrzeugs kann dadurch gesenkt werden. Ferner können solche Mildhybrid- oder Mikrohybridsysteme das Bordnetz versorgen.

Für derartige Fahrzeuge in jüngerer Zeit entwickelte Bordnetze weisen außer einem ersten Basisbordnetz mit einem ersten Spannungsniveau noch ein zweites Teilnetz (Inselnetz) mit einem zweiten Spannungsniveau auf. Dabei sind das erste und das zweite Teilnetz bzw. Spannungsniveau über einen Spannungswandler miteinander gekoppelt. An dem ersten Teilnetz mit der niedrigeren Nennspannung (z. B. 24 V) sind in der Regel Verbraucher mit niedriger Leistungsaufnahme angeschlossen. Ferner kann ein erster Energiespeicher vorgesehen sein. An dem zweiten Teilnetz mit der höheren Nennspannung (z. B. 48 V) können Hochleistungsverbraucher, ein Generator und ein zweiter Energiespeicher angeschlossen sein. Niederspannungsverbraucher können in kritischen Betriebssituationen wahlweise aus dem zweiten Teilnetz versorgt werden. Ein solches für ein Mildhybrid- oder Mikrohybridsystem geeignetes Bordnetz ist beispielsweise aus der DE 10 2013 014 103 A1 bekannt.

Der Generator kann ein sogenannter Mehrspannungsgenerator (Multi-Voltage-Generator, MVG) sein, der je nach an seiner Erregerspule anliegenden Spannung eine hohe oder eine niedrige Spannung erzeugt und die beiden Teilnetze mit elektrischer Leistung versorgt. Falls der Generator als elektrischer Starter-Generator, z. B. als Kurbelwellenstartergenerator ausgebildet ist, kann dieser für den Motorstart verwendet werden. Meist wird zwischen diesen Teilnetzen zur Kopplung der beiden Teilnetze ein Spannungs-(DC/DC)-Wandler installiert, der in der Lage ist, Energie zwischen den Netzen zu transferieren. Der Generator im zweiten Teilnetz kann ferner für einen Rekuperationsbetrieb eingesetzt werden, wobei bei der Verzögerung des Fahrzeugs frei werdende kinetische Energie in elektrische Energie gewandelt (rekuperiert) wird. Die so gewonnene elektrische Energie kann in wenigstens einem Energiespeicher gespeichert und in anderen Fahrsituationen, z. B. zum Antrieb des Fahrzeugs oder zur Versorgung elektrischer Verbraucher, genutzt werden. Der Wirkungsgrad des Fahrzeugs kann dadurch erheblich gesteigert werden.

Es ist eine Aufgabe der Erfindung, diesen Stand der Technik weiterzubilden, insbesondere um die Kraftstoffeffizienz derartiger Fahrzeuge weiter zu verbessen.

Diese Aufgaben werden durch ein Bordnetz mit den Merkmalen des unabhängigen Anspruchs gelöst. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Das erfindungsgemäße Bordnetz für ein Kraftfahrzeug weist in Übereinstimmung mit dem Stand der Technik ein erstes Teilnetz, in dem eine erste Nennspannung U1 anliegt, und ein zweites Teilnetz, in dem eine zweite Nennspannung U2 anliegt, auf, sowie einen Spannungswandler, der das erste und zweite Teilnetz miteinander koppelt und der ausgebildet ist, das erste Teilnetz zumindest zeitweise mit elektrischer Energie aus dem zweiten Teilnetz zu versorgen. Die Nennspannung im zweiten Teilnetz ist vorzugsweise höher als die Nennspannung im ersten Teilnetz. Die Nennspannung im zweiten Teilnetz kann 48V betragen. Die Nennspannung im ersten Teilnetz kann 24V betragen. Der Spannungswandler kann ein Gleichspannungswandler (DC/DC-Wandler) sein. Das Bordnetz ist insbesondere ein Bordnetz eines Mildhybrid- oder Mikrohybrid-Fahrzeugs.

Das erste Teilnetz kann einen ersten Energiespeicher zur Speicherung elektrischer Energie und einen durch mehrere Verbraucher gebildeten ersten Lastwiderstand umfassen. Das zweite Teilnetz umfasst eine generatorisch und motorisch betreibbare elektrische Maschine, die dazu ausgebildet ist, einen Verbrennungsmotor des Kraftfahrzeugs zumindest zeitweise anzutreiben und in einem Rekuperationsbetrieb elektrische Energie zu erzeugen. Diese elektrische Maschine wird nachfolgend als erste elektrische Maschine bezeichnet. Die elektrische Maschine kann insbesondere zum Starten, insbesondere zum Warmstart des Verbrennungsmotors des Kraftfahrzeugs im Rahmen einer Start-Stopp-Vorrichtung des Kraftfahrzeugs und zum Generatorbetrieb und Rekuperationsbetrieb ausgebildet sein.

Das zweite Teilnetz umfasst ferner einen Energiespeicher (nachfolgend als zweiter Energiespeicher bezeichnet) zur Speicherung elektrischer Energie, der dazu ausgebildet ist, die erste elektrische Maschine zumindest zeitweise mit elektrischer Energie zu versorgen. Der zweite Energiespeicher kann ferner durch die von der ersten elektrischen Maschine in einem Rekuperationsbetrieb erzeugte Energie geladen werden. Ferner können auch im zweiten Teilnetz elektrische Verbraucher angeschlossen sein. Das erste Teilnetz kann auch als Basisbordnetz und das zweite Teilnetz als Inselnetz bezeichnet werden.

Gemäß allgemeinen Gesichtspunkten der Erfindung weist das Bordnetz ferner eine generatorisch betreibbare elektrische Maschine auf, die im ersten Teilnetz angeordnet ist und die von einer Steuereinrichtung steuerbar ist, um das erste Teilnetz zumindest zweitweise mit elektrischer Energie zu versorgen. Diese elektrische Maschine im ersten Teilnetz wird nachfolgend als "zweite elektrische Maschine" bezeichnet, zur besseren Unterscheidung von der elektrischen Maschine, die im zweiten Teilnetz angeordnet ist und hier als "erste elektrische Maschine" bezeichnet wird. Hierbei kann im ersten Teilnetz nur eine elektrische Maschine angeordnet sein, nämlich die zweite elektrische Maschine, oder es kann noch mindestens eine weitere elektrische Maschine im ersten Teilnetz angeordnet sein, wie z. B. ein Startermotor, was nachfolgend noch erläutert wird. Die zweite elektrische Maschine kann gemäß einer Ausführungsform auch motorisch zur Entlastung des Verbrennungsmotors betreibbar sein. Das Bordnetz mit einer im ersten Teilnetz angeordneten elektrischen Maschine bietet den besonderen Vorzug, dass das erste Teilnetz auch direkt über diese elektrische Maschine steuerbar oder regelbar mit elektrischer Energie versorgbar ist - zusätzlich zur der Versorgung aus dem zweiten Teilnetz über den Spannungswandler. Dieser energetische Vorteil kann zu einer Reduktion des Kraftstoffverbrauchs im Fahrzeug führen, da das Bordnetz nun je nach Fahrbetrieb länger aus dem Energiespeicher des zweiten Teilnetzes versorgt werden kann.

Das erste Teilnetz kann ferner einen Startermotor aufweisen, der insbesondere als Ritzelstarter ausgeführt ist. Dies bietet den Vorzug, dass der Startermotor im ersten Teilnetz für den Kaltstart und die vorzugsweise als Startergenerator dienende erste elektrische Maschine nur für den Warmstart genutzt und so kleiner ausgelegt werden kann. Gemäß dieser Ausführungsform weist das erste Teilnetz somit einen Startermotor und die zweite elektrische Maschine auf. Der Startermotor kann nur für den motorischen Betrieb und nicht für den generatorischen Betrieb ausgeführt sein.

Gemäß einer bevorzugten Ausführungsform ist die Steuereinrichtung ausgebildet, einen generatorischen Betrieb der zweiten elektrischen Maschine zu aktivieren, wenn ein Parameter, der ein Maß für eine momentane Bordnetzlast angibt, einen vorbestimmten Schwellenwert überschreitet. Bei dieser Ausführungsform wird die zweite elektrische Maschine nur bei Belastungsspitzen des Bordnetzes zugeschaltet und läuft ansonsten lediglich passiv mit.

Gemäß einer weiteren besonders bevorzugten Ausführungsform ist die Steuereinrichtung ausgebildet, im Rekuperationsbetrieb und/oder Schubbetrieb des Kraftfahrzeugs die zweite elektrische Maschine generatorisch zu betreiben, um das erste Teilnetz mit elektrischer Energie zu versorgen und/oder den ersten Energiespeicher zu laden. Dadurch können die Menge der in Rekuperationsphasen rekuperierbaren Energie und die Ladeleistung des zweiten Energiespeichers erhöht werden und so zu einer Erhöhung der Kraftstoffeinsparung, insbesondere in Verbindung mit einer Start-Stopp-Vorrichtung des Kraftfahrzeugs, führen.

Gemäß einem weiteren Aspekt der Erfindung kann die Steuereinrichtung ausgebildet sein, einen Parameter zu überwachen, der ein Maß für die Versorgungsleistung ist, mit der der Spannungswandler das erste Teilnetz aus dem zweiten Teilnetz versorgt, und, falls eine Höhe der Versorgungsleistung unter einen vorbestimmten Schwellenwert fällt, einen generatorischen Betrieb der zweiten elektrischen Maschine zu starten. Dies bietet den Vorteil, dass die zweite elektrische Maschine gezielt in Situationen eingesetzt wird, wenn es zu einem unerwünschten Rückgang der Versorgungsleistung des ersten Teilnetzes aus dem zweiten Teilnetz kommt, der auf diese Weise kompensiert oder zumindest teilweise kompensiert werden kann.

Eine besonders vorteilhafte Möglichkeit der erfindungsgemäßen Realisierung sieht hierbei vor, dass die Steuereinrichtung ausgebildet ist, eine Spannung an einem Einspeisepunkt des ersten Teilnetzes zu überwachen. Der Einspeisepunkt ist vorzugsweise eine Stelle des ersten Teilnetzes, an der sich die Ströme oder Leistungsflüsse aus der zweiten elektrischen Maschine und aus dem Spannungswandler treffen. Die Steuereinrichtung ist hierbei ausgebildet, falls ein Abfallen der Spannung am Einspeisepunkt festgestellt wird, den festgestellten Abfall der Spannung durch eine Erhöhung der Spannungsvorgabe der zweiten elektrischen Maschine zu kompensieren oder zumindest zum Teil zu kompensieren. Diese Variante bietet eine zuverlässige und kostengünstig zu realisierende Möglichkeit, geeignete Situationen für den Unterstützungsbetrieb durch die zweite elektrische Maschine zu erkennen. Besonders vorteilhaft ist hierbei, wenn die Kompensation mittels der zweiten elektrischen Maschine erst dann erfolgt, wenn die Spannung am Einspeisepunkt unter einen vorbestimmten Schwellenwert gefallen ist. Durch die Wahl des Schwellenwerts kann bei kleinen Schwankungen der Spannung am Einspeisepunkt verhindert werden, dass es zu schnellen Abfolgen von Aktivierungen und Deaktivierungen der elektrischen Maschine kommt.

Gemäß einem weiteren Aspekt besteht die Möglichkeit, dass die Steuereinrichtung ausgebildet ist, die zweite elektrische Maschine in einem generatorischen Betrieb so anzusteuern, dass eine Höhe des von der zweiten elektrischen Maschine bereitgestellten Einspeisestroms in das erste Teilnetz zu einer Höhe des vom Spannungswandler bereitgestellten Einspeisestroms in das erste Teilnetz ein vorbestimmtes Verhältnis bildet.

Hierbei besteht die Möglichkeit, dass das vorbestimmte Verhältnis ein fester vorgegebener Wert ist, beispielsweise 50/50, falls die zweite elektrische Maschine den gleichen Einspeisestrom in das erste Teilnetz liefern soll, wie der Spannungswandler. Alternativ besteht die Möglichkeit, dass die Steuereinrichtung ausgebildet ist, das vorbestimmte Verhältnis in Abhängigkeit von den jeweiligen Wirkungsgraden der ersten elektrischen Maschine, vorzugsweise des jeweiligen Gesamtwirkungsgrades aus der ersten elektrischen Maschine und dem Spannungswandler, und der zweiten elektrischen Maschine in einem momentanen Betriebspunkt des Kraftfahrzeugs zu bestimmen. Ferner kann dass die Steuereinrichtung ausgebildet ist, das vorbestimmte Verhältnis in Abhängigkeit von einem aktuellen Ladezustand des zweiten Energiespeichers zu bestimmen.

Hierbei kann berücksichtigt werden, dass die Wirkungsgrade der ersten und zweiten elektrischen Maschine je nach momentaner Fahrsituation bzw. Betriebspunkt unterschiedlich sind, so dass für einen wirkungsoptimalen Betrieb der generatorische oder motorische Leistungsbedarf entsprechend jeweils auf die beiden elektrischen Maschinen vorteilhaft so aufgeteilt werden kann, dass der Gesamtwirkungsgrad jeweils optimal ist. Falls beispielsweise der Energiespeicher im zweiten Teilnetz (zweiter Energiespeicher) mit rekuperierter Energie geladen ist, kann sich der in der Steuereinrichtung berechnete Wirkungsgrad aus der Wirkungsgradkette, die gebildet ist durch die erste elektrische Maschine inklusive deren Inverter, dem Spannungswandler und dem zweiten Energiespeicher in den jeweiligen Betriebspunkten erhöhen, da dieser z. B. rechnerisch um einen Faktor für die gespeicherte rekuperierte Energie verbessert wird, sodass vorzugsweise vorhandene rekuperierte Energie für die Bordnetzversorgung über den Spannungswandler verwendet wird. Die Erzeugung von Energie über die zweite elektrische Maschine ist in der Regel unwirtschaftlicher, falls das Energie-Niveau im zweiten Energiespeicher oberhalb einer bestimmten Grenze liegt oder die Spannung im zweiten Teilnetz durch das Entladen des zweiten Energiespeichers unterhalb eines definierten Wertes fällt.

Gemäß einem weiteren Aspekt kann die zweite elektrische Maschine eine an sich bekannte Lichtmaschine sein. Ferner kann die zweite elektrische Maschine über einen Riementrieb mit dem Verbrennungsmotor in Antriebsverbindung stehen. Die erste elektrische Maschine kann ein Kurbelwellenstartergenerator sein.

Gemäß einem weiteren Aspekt kann die Steuereinrichtung ausgebildet sein, die zweite elektrische Maschine zeitweise motorisch zu betreiben, um den Verbrennungsmotor mit einem Drehmoment zu unterstützen.

Gemäß einem weiteren Aspekt kann der Spannungswandler bidirektional ausgeführt sein, wobei die Steuereinrichtung ausgebildet ist, zumindest zeitweise die von der zweiten elektrischen Maschine generierte elektrische Leistung über den Spannungswandler in das zweite Teilnetz zum Laden des zweiten Energiespeichers zu transferieren.

Die Erfindung betrifft ferner ein Kraftfahrzeug, aufweisend ein Bordnetz, wie in diesem Dokument beschrieben. Das Kraftfahrzeug ist vorzugsweise ein Mikrohybridfahrzeug oder Mildhybridfahrzeug und kann eine Start-Stopp-Vorrichtung aufweisen, wie eingangs beschrieben. Das Kraftfahrzeug kann ferner ein Nutzfahrzeug, beispielsweise ein Lastkraftwagen oder Omnibus, sein.

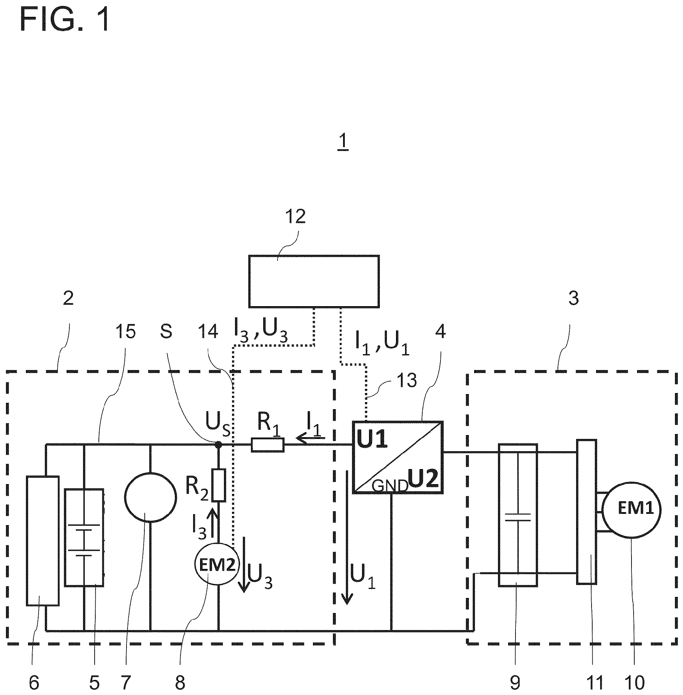

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügte Figur 1 beschrieben. Hierbei zeigt Figur 1 eine Bordnetztopologie eines Bordnetzes gemäß einem Ausführungsbeispiel der Erfindung.

Figur 1 zeigt schematisch ein Ausführungsbeispiel für ein Bordnetz 1 eines Fahrzeugs, insbesondere eines Nutzfahrzeugs, das als Mildhybrid oder Mikrohybridfahrzeug ausgeführt ist. Das Bordnetz 1 weist zwei Teilnetze 2, 3 auf: Ein erstes Teilnetz (Basisbordnetz) 2, in dem eine erste Netzspannung U1 von 24 Volt anliegt und das einen ersten Energiespeicher 5 und einen Lastwiderstand 6 umfasst. Der Lastwiderstand 6 ist durch wenigstens einen, vorzugsweise durch mehrere Verbraucher gebildet. Im ersten Teilnetz 2 ist ferner ein konventioneller Starter 7, z. B. ein Ritzelstarter, für den Verbrennungsmotor (nicht gezeigt) des Kraftfahrzeugs vorgesehen, der zum Kaltstart verwendet wird. Im ersten Teilnetz ist ferner eine elektrische Maschine 8 vorgesehen, die generatorisch betreibbar ist und vorzugsweise auch motorisch betrieben werden kann. Es kann sich hierbei um eine herkömmliche Lichtmaschine handeln, die über einen Riemenantrieb von dem Verbrennungsmotor des Kraftfahrzeugs antreibbar ist.

Ferner umfasst das Bordnetz 1 ein zweites Teilnetz 3, in dem eine zweite Netzspannung U2 von 48 Volt anliegt und in dem eine elektrische Maschine 10 vorgesehen ist. Die elektrische Maschine 10 ist zum Starten eines Verbrennungsmotors des Kraftfahrzeugs im Rahmen eines Start-Stopp Betriebs und zum Generatorbetrieb bzw. Rekuperationsbetrieb ausgebildet. Im zweiten Teilnetz 3 ist ferner ein zweiter Energiespeicher 9 vorgesehen, der mit der elektrischen Maschine 10 über einen Inverter 11 verbunden ist. Der zweite Energiespeicher 9 ist ausgebildet, von der elektrischen Maschine 10 in dem Generatorbetrieb bzw. Rekuperationsbetrieb erzeugte elektrische Energie zu speichern. Der Energiespeicher 9 kann lediglich beispielhaft als Doppelschichtkondensator ausgebildet sein. Der erste Energiespeicher 5 kann ebenfalls als Kondensatorspeicher ausgebildet sein oder als Bleiakkumulator oder Lithium-Ionen-Akkumulator ausgebildet sein. Im zweiten Teilnetz 3 können optional auch weitere Verbraucher angeordnet sein, für die ein Betrieb mit 48V-Betriebsspannung vorteilhaft, z. B. effizienter, ist. Die Stromleitungen 15 sind in Figur 1 mit durchgezogenen schwarzen Linien gekennzeichnet.

Das Bordnetz 1 umfasst ferner einen Spannungswandler 4, der das erste Teilnetz 2 mit dem zweiten Teilnetz 3 verbindet, so dass das erste Teilnetz 2 mit elektrischer Energie aus dem zweiten Teilnetz 3 versorgt werden kann. Der Spannungswandler 4 ist hierzu ausgebildet, eine Gleichspannung aus einem der Teilnetze 2, 3, beispielsweise eine Gleichspannung, mit der das erste Teilnetz 2 betrieben wird, zu empfangen und eine Ausgangsspannung zu erzeugen, welche von der eingangsseitig empfangen Spannung verschieden ist (DC/DC-Wandler). Der Spannungswandler 4 kann auch bidirektional ausgeführt sein.

Das Bordnetz umfasst ferner eine Steuereinheit 12, die über entsprechende Signalleitungen mit den entsprechenden Komponenten des Bordnetzes 1 verbunden ist, insbesondere dem Spannungswandler 4 und der elektrischen Maschine 8.

Mit U1 ist die am ersten Teilnetz 2 erzeugte Ausgangsspannung 4 des Spannungswandlers 4 bezeichnet. Mit I1 ist der entsprechende Einspeisestrom bezeichnet, der vom Spannungswandler 4 zur Versorgung des ersten Teilnetzes (Basisbordnetz) 2 erzeugt wird. Vorstehend wurde bereits erwähnt, dass die Steuereinrichtung 12 den Betrieb der zweiten elektrischen Maschine 8 steuern oder regeln kann. Soll die zweite elektrische Maschine 8 beispielsweise ebenfalls eine Versorgungsleistung für das erste Teilnetz 2 bereitstellen, kann die Steuereinrichtung 12 hierfür die Spannungsvorgabe U3 an der elektrischen Maschine 8 erhöhen, so dass diese einen Einspeisestrom I3 erzeugt. Mit dem Bezugszeichen S ist ein Einspeisepunkt S bezeichnet, aus dem sich der Einspeisestrom I1 aus dem Spannungswandler 4 und der Einspeisestrom I3 von der elektrischen Maschine 8 treffen. Die entsprechende Spannung am Einspeisepunkt S ist mit US bezeichnet.

Die Signalleitungen bzw. Steuerleitungen sind in Figur 1 mit gepunkteten Linien dargestellt. Die Signalleitung bzw. Steuerleitung 14 dient zur Steuerung der elektrischen Maschine 8, d. h. zur Übermittlung der Spannungsvorgabe U3 für die elektrische Maschine 8 und zur Messung des Stromes I3. Die Signalleitung 13 dient zur Erfassung von I1 und U2. Die Steuereinheit 12 kann als separates Steuergerät zur Steuerung der elektrischen Maschine 8 ausgebildet sein oder als Teil einer übergeordneten Steuereinheit (nicht dargestellt), die andere Komponenten des Bordnetzes 1, insbesondere den Spannungswandler 4 und die Energiespeicher 5, 9, überwacht und steuert. Eine solche übergeordnete Steuereinheit empfängt beispielsweise von den Energiespeichern 5, 9 bzw. dem Ladungszustandssensor 8 und von einem Batteriemanagementsystem (nicht gezeigt) der Energiespeichers 5, 9 Daten über die Ladungszustände der Energiespeicher 5, 9. Die Steuereinheit ist ferner ausgebildet, an den Spannungswandler 4 in Abhängigkeit der empfangenen Ladungszustände oder Lastanforderungen entsprechende Steuersignale auszugeben. In Abhängigkeit der von der Steuereinheit empfangenen Steuersignale ist der Spannungswandler 4 eingerichtet, Energie vom ersten Teilnetz 2 in das zweite Teilnetz 3 zu übertragen und ggf. umgekehrt, falls dieser bidirektional ausgeführt ist. Eine solche übergeordnete Bordnetzsteuereinheit ist an sich aus dem Stand der Technik bekannt und daher hier nicht näher beschrieben.

Nachfolgend wird beispielhaft die Steuerung der elektrischen Maschine 8 durch die Steuereinheit 12 beschrieben. Die Steuerung der elektrischen Maschine 8 kann durch die Steuereinheit 12 z. B. spannungsgesteuert erfolgen. Hierzu ist die Steuereinheit 12 ausgebildet, die Spannung US am Einspeisepunkt S zu überwachen, an dem sich die Ströme I3, I1 aus der zweiten elektrische Maschine 8 und aus dem Spannungswandler 4 treffen, die in das erste Teilnetz eingespeist werden. Falls die Spannung US am Einspeisepunkt S um mehr als einen vorbestimmten Schwellenwert abfällt, z. B. weil nicht mehr genügend Energie aus dem zweiten Teilnetz 3 zur Versorgung des ersten Teilnetzes 2 verfügbar ist, kompensiert die Steuereinheit 12 den festgestellten Abfall der Spannung US durch eine Erhöhung der Spannungsvorgabe U3 an der elektrischen Maschine 8.

Wenn z. B. der Spannungswandler 4 die Versorgungsleistung für das 24V-Bordnetz 2 reduziert, fällt infolgedessen die Spannung US am Einspeisepunkt S ab. Dies kann gemessen werden und anschließend über eine Erhöhung der Spannung U3 der elektrischen Maschine 8 kompensiert werden. Dies geschieht, indem die Steuereinheit 12 die Spannungsvorgabe U3 an der elektrischen Maschine 8 erhöht. Es gelten hierbei die folgenden Zusammenhänge:

$$\text{(Formel 1):} \qquad U1 = US + I1 * R1$$

$$\text{(Formel 2):} \qquad U3 = US + I3 * R2$$

$$\text{(Formel 3):} \qquad U1 - I1 * R1 = U3 - I3 * R2$$

Falls z. B. die elektrische Maschine 8 und der Spannungswandler 4 den gleichen Einspeisestrom liefern sollen, gilt I3 = I1 = I. Somit lässt sich die Formel 3 umstellen, so dass U3 = U1 - I * (R1 - R2) gilt. Ebenfalls gilt folgende Formel:

$$\text{(Formel 4):} \qquad (U1 - Us)/(U3 - Us) = R1 / R2.$$

Die Widerstände R1 und R2 müssen bekannte Werte sein. Beispielsweise handelt es sich hierbei entweder um definierte Widerstände (z. B. Shunt) wobei die Leistungswiderstände vernachlässigt werden würden. Oder es kann sich um Leitungswiderstände handeln, von denen man die Temperatur kennt und diese rechnerisch kompensieren kann und es keine Erhöhung der Übergangswiderstände über die Lebensdauer gibt.

Der notwendige Strom $I_{res}$ für den Verbraucher 6, den Energiespeicher bzw. die Batterie 5 und für den Ritzelstarter 7 ist die Summe von I1 und I3. Falls die Ströme I=I1 und I=I3 gleich groß sind, beträgt der Strom $I_{res}$ = 2 I. Der Strom I ist als Ausgangsgröße vom Spannungswandler 4 bekannt. Durch Umstellen von Formel 4 kann nun die notwendige Spannung U3 an der zweiten elektrischen Maschine 8 berechnet werden.

$$\text{(Formel 5)} \qquad U3 = Us + ((U1 - Us) * R2) / R1$$

Auf diese Spannung regelt nun die zweite elektrische Maschine (Lichtmaschine) 8. Dass die zweite elektrische Maschine 8 und der Spannungswandler 4 auf den gleichen Strom regeln, ist nur ein mögliches Beispiel. Analog kann ebenfalls für andere Verhältnisse von I3 und I1 der Formelsatz hergeleitet werden.

Die Steuereinheit 12 kann ferner die elektrische Maschine 8 gezielt in bestimmten Betriebsphasen, insbesondere in Rekuperationsphasen, vom passiven auf den aktiven generatorischen Betrieb umschalten, um das Basisbordnetz 2 zu versorgen, welches somit nicht über den Speicher 9 des zweiten Teilnetzes 3 versorgt werden muss. Somit erhöht sich die Ladeleistung, mit welcher der Speicher 9 im Rekuperationsbetrieb geladen werden kann.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen. Insbesondere beansprucht die Erfindung auch Schutz für den Gegenstand und die Merkmale der Unteransprüche unabhängig von den in Bezug genommenen Ansprüchen.

**Bezugszeichenliste**

| | |
|---|---|
| 1 | Bordnetz |
| 2 | Erstes Teilnetz 2 (Basisbordnetz) |
| 3 | Zweites Teilnetz 3 (Inselnetz) |
| 4 | Spannungswandler, insbesondere DC/DC-Wandler |
| 5 | Elektrischer Energiespeicher |
| 6 | Lastwiderstand (Summe Bordnetzverbraucher) |
| 7 | Startermotor (elektrische Maschine) |
| 8 | Elektrische Maschine |
| 9 | Elektrischer Energiespeicher |
| 10 | Startergenerator |
| 11 | Inverter |
| 12 | Steuereinheit |
| 13, 14 | Steuerleitungen |
| 15 | Stromleitungen des Bordnetzes |

**Patentansprüche**

**1.** Bordnetz (1) für ein Kraftfahrzeug, insbesondere eines Mildhybrid- oder Mikrohybrid-Fahrzeugs, mit

einem ersten Teilnetz (2), in dem eine erste Nennspannung (U1) anliegt, umfassend einen ersten Energiespeicher (5) und einen durch mehrere Verbraucher gebildeten ersten Lastwiderstand (6);
einem zweiten Teilnetz (3), in dem eine zweite Nennspannung (U2) anliegt, umfassend eine generatorisch und motorisch betreibbare erste elektrische Maschine (10), die dazu ausgebildet ist, einen Verbrennungsmotor des Kraftfahrzeugs zumindest zeitweise anzutreiben und in einem Rekuperationsbetrieb elektrische Energie zu erzeugen, und einen zweiten Energiespeicher (9), der dazu ausgebildet ist, die erste elektrische Maschine (10) zumindest zeitweise mit elektrischer Energie zu versorgen;
einem Spannungswandler (4), der das erste und zweite Teilnetz (2, 3) miteinander koppelt und der ausgebildet ist, das erste Teilnetz (2) zumindest zeitweise mit elektrischer Energie aus dem zweiten Teilnetz (3) zu versorgen;

**dadurch gekennzeichnet, dass** das Bordnetz (1) eine generatorisch betreibbare zweite elektrische Maschine (8) aufweist, die im ersten Teilnetz angeordnet ist und die von einer Steuereinrichtung (12) steuerbar ist, um das erste Teilnetz (2) zumindest zeitweise mit elektrischer Energie zu versorgen.

2. Bordnetz (1) nach Anspruch 1, **dadurch gekennzeichnet, dass** das erste Teilnetz (2) ferner einen Startermotor (7) aufweist, der insbesondere als Ritzelstarter ausgeführt ist.

3. Bordnetz (1) nach einem der vorhergehenden Ansprüche, **dadurch gekennzeichnet, dass** die Steuereinrichtung (12) ausgebildet ist, einen generatorischen Betrieb der zweiten elektrischen Maschine (8) zu aktivieren, wenn ein Parameter, der ein Maß für eine momentane Bordnetzlast angibt, einen vorbestimmten Schwellenwert überschreitet

4. Bordnetz nach einem der vorhergehenden Ansprüche, **dadurch gekennzeichnet, dass** die Steuereinrichtung (12) ausgebildet ist, im Rekuperationsbetrieb und/oder Schubbetrieb des Kraftfahrzeugs die zweite elektrische Maschine (8) generatorisch zu betreiben, um das erste Teilnetz (2) mit elektrischer Energie zu versorgen und/oder den ersten Energiespeicher (6) zu laden.

5. Bordnetz nach einem der vorhergehenden Ansprüche, **dadurch gekennzeichnet, dass** die Steuereinrichtung (12) ausgebildet ist, einen Parameter (US) zu überwachen, der ein Maß für die Versorgungsleistung ist, mit der der Spannungswandler (4) das erste Teilnetz aus dem zweiten Teilnetz versorgt, und falls eine Höhe der Versorgungsleistung unter einen vorbestimmten Schwellenwert fällt, einen generatorischen Betrieb der zweiten elektrischen Maschine (8) zu starten.

6. Bordnetz nach einem der vorhergehenden Ansprüche, **dadurch gekennzeichnet, dass** die Steuereinrichtung (12) ausgebildet ist,

   a) eine Spannung (US) an einem Einspeisepunkt (S) zu überwachen, wobei ein Einspeisepunkt (S) eine Stelle des ersten Teilnetzes (2) ist, an der sich die Ströme (I3, 11) aus der zweiten elektrische Maschine (8) und aus dem Spannungswandler (4) treffen, und
   b) falls ein Abfallen der Spannung (US) am Einspeisepunkt (S), vorzugsweise unter einen vorbestimmten Schwellenwert, festgestellt wird, den festgestellten Abfall der Spannung (US) durch eine Erhöhung der Spannungsvorgabe (U3) an der zweiten elektrischen Maschine (8) zumindest teilweise zu kompensieren.

7. Bordnetz nach einem der vorhergehenden Ansprüche, **dadurch gekennzeichnet, dass** die Steuereinrichtung (12) ausgebildet ist, die zweite elektrische Maschine (8) in einem generatorischen Betrieb so anzusteuern, dass eine Höhe des von der zweiten elektrischen Maschine (3) bereitgestellten Einspeisestroms (I3) zu einer Höhe des vom Spannungswandler (4) bereitgestellten Einspeisestroms (I1) in das erste Teilnetz (2) ein vorbestimmtes Verhältnis bildet.

8. Bordnetz nach Anspruch 7, **dadurch gekennzeichnet,**

   a) **dass** die Steuereinrichtung (12) ausgebildet ist, das vorbestimmte Verhältnis in Abhängigkeit von den jeweiligen Wirkungsgraden der ersten und zweiten elektrischen Maschine (8, 10) und/oder von einem momentanen Ladezustand des zweiten Energiespeichers in einem momentanen Betriebspunkt des Kraftfahrzeugs zu bestimmen; oder
   b) **dass** das vorbestimmte Verhältnis ein fester vorgegebener Wert ist.

9. Bordnetz nach einem der vorhergehenden Ansprüche, **dadurch gekennzeichnet, dass** die zweite elektrische Maschine (8) über einen Riementrieb mit dem Verbrennungsmotor in Antriebsverbindung steht und/oder dass die erste elektrische Maschine (10) ein Kurbelwellenstartergenerator ist.

10. Bordnetz nach einem der vorhergehenden Ansprüche, **dadurch gekennzeichnet, dass** die Nennspannung im zweiten Teilnetz höher als die Nennspannung im ersten Teilnetz ist, wobei die Nennspannung im zweiten Teilnetz vorzugsweise 48V beträgt und die Nennspannung im ersten Teilnetz vorzugsweise 24V beträgt.

11. Bordnetz nach einem der vorhergehenden Ansprüche, **dadurch gekennzeichnet, dass** die Steuereinrichtung (12) ausgebildet ist, die zweite elektrische Maschine (8) zweitweise motorisch zu betreiben, um den Verbrennungsmotor mit einem Drehmoment zu unterstützen.

12. Bordnetz nach einem der vorhergehenden Ansprüche, **dadurch gekennzeichnet, dass** der Spannungswandler bidirektional ausgeführt ist, wobei die Steuereinrichtung ausgebildet ist, zumindest zeitweise die von der zweiten elektrischen Maschine (8) generierte elektrische Leistung über den Spannungswandler (4) in das zweite Teilnetz (3) zum Laden des zweiten Energiespeichers (9) zu transferieren.

13. Mikrohybridfahrzeug oder Mildhybridfahrzug, insbesondere Nutzfahrzeug, mit einem Bordnetz (1) nach einem der vorstehenden Ansprüche.

FIG. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102013014103 A1